Europäisches Patentamt

**European Patent Office**

Office européen des brevets

(11) Publication number: **0 280 485**
**A2**

## (12) EUROPEAN PATENT APPLICATION

(21) Application number: **88301467.2**

(22) Date of filing: **22.02.88**

(51) Int. Cl.⁴: **H 01 L 41/16**
**H 04 R 19/01**

(30) Priority: **25.02.87 GB 8704392**

(43) Date of publication of application:
**31.08.88 Bulletin 88/35**

(84) Designated Contracting States:
**BE DE ES FR IT NL**

(71) Applicant: **Pook, Harold Wilson Meredith**
**120 Widmore Road**
**Bromley Kent BR1 3BE (GB)**

(72) Inventor: **Pook, Harold Wilson Meredith**
**120 Widmore Road**
**Bromley Kent BR1 3BE (GB)**

(74) Representative: **Jones-Robinson, Stanley**
**The Laurels 320 London Road Charlton Kings**
**Cheltenham Gloucestershire GL52 6YJ (GB)**

(54) **Electret elements.**

(57) Mass produced polymeric materials, such as plastics sheet 1, often exhibit a residual electrostatic polarity which hitherto has been considered unwanted. The intensity of the resultant field is so low that it is of no practical use and is generally neutralized by the attraction to the sheet of contaminants such as dust. A useful electret element E1 is produced by coating a face of the sheet 1 with a thin layer of polymeric material 3 of opposite polarity. Such an element can be used succesfully for electrostatic 'pinning' because it exhibits an electrostatic field of greater intensity than that of the sheet 1 prior to coating.

fig.1

EP 0 280 485 A2

Bundesdruckerei Berlin

## Description

<< DPA NB=1>> "ELECTRET ELEMENTS"

The invention relates to electret materials generally and is particularly, but not exclusively, concerned with the production of planar electret elements for a variety of uses including use as visual display media.

Various dielectric materials can be subject to permanent or temporary electrical polarization, thereby producing a corresponding electrical field externally of the polarized material. Those subject to permanent polarization are known as electret materials and the charges that produce the associated electrical field are called electret charges.

Electret charges in polymeric materials can be produced using a variety of techniques which in general require that the electret material is subject to a heating process during which it is polarized by a high voltage discharge, by an electron beam or by nuclear irradiation and after which it is cooled to retain the requisite polarization and thus 'freeze in' the electret charges. A recent development in the polarization of electrets utilises the phenomena of charge transfer (or contact electrification) between different materials to produce the electrical energy required to effect polarization of the electret material.

Research into the nature of contact electrification has established that apparently random electrical charges in polymeric materials can be categorised according to the extent and location thereof. The nature and extent of the charges can be determined using a thermally stimulated discharge current technique. In this technique stored charges within the polymer are released by progressively heating the polymer and measuring the resultant discharge current. A spectrum displaying the current measured as a function of the temperature can be analysed to determine the nature and extent of the various stored charges.

The charges of an electret are commonly 'free' surface charges, 'trapped' surface charges and/or 'polar alignment' charges which reside at various levels at or near the surface, and/or well within the body of the polymer. It is considered that the 'polar alignment' charges, which relate to polar alignment of molecules within the body of the polymer, provide the principal electret charges.

An ordinarily undesirable and hitherto unrealised and unexplained characteristic of mass produced proprietory polymeric electret materials in sheet form, which has been appreciated by the inventor, is that they are polarized unintentionally during manufacture. However, such materials are in general not suited for commercial use as electrets because the charge density exhibited is relatively low and results in an electrical field of insufficient strength. The present invention provides a means by which these low cost materials can be used to produce an electret element or assembly exhibiting a usable electrical field strength.

Mass produced polymeric sheet is often manufactured by extruding the material in a molten form from a slot die on to a casting surface such as a moving belt or rotating drum on which it is quenched from a molten to a solid state. Typically, the extrudate is subsequently drawn into sheet form by calendering rollers. Contact between the extrudate and the various calendering and casting surfaces induces electrostatic charges by contact electrification on contacting surfaces and within the sheet. These charges together with any drawing of the sheet effects alignment and polarization of the polymer molecules. The quenching of the sheet ensures that the polarization is 'frozen in' and the sheet thereby retains electret charges. In some processes the molten extrudate is also subjected to a high voltage electrical field to pin it electrostatically to the casting surface which also induces electrostatic polarization.

Steps are often taken during the manufacture of polymeric sheet to minimise the residual charges therein. However, certain polymers, notably various polyesters, have been found by the inventor to retain electret charges at the conclusion of manufacture. Polymeric sheet which retains latent electret charges will acquire temporary surface charges during subsequent forming and/or handling operations which will act to neutralise the associated electrical field.

The polarity of the charges exhibited by a polarizable material is dependent on its natural polarity, and thus a given dielectric material will be disposed toward a negative or positive polarity, or will be polar neutral depending on the type and formulation of that material. Examples of the natural polarity of materials include polymers of vinyl chloride which are polar negative, polycarbonates which are polar positive and polyesters which can be of either polarity dependent on the specific formulation and method of manufacture.

An unshielded electret sheet having negative electret charges produces a negative electrical field adjacent both faces and is called an open or unshielded monopolar negative electret. Conversely, if the sheet has positive electret charges it is called an unshielded positive electret. By covering or electrically shielding both faces of such electrets, closed circuit electrets are produced. When only one face of such an electret is shielded then an electrical field is produced only by the unshielded face.

Typically electrical shielding requires the application of a conductive coating or covering of polar neutral (electrically inert) materials such as paper, card, wood, or glass in close contact with the appropriate face of the electret. The shielding of one face of the sheet electret has been found to enhance the measurable charge density at the other face of the sheet. It is believed that this is a consequence of the shielding retaining and in effect reflecting the charges developed at the interface of the coating or covering toward the other face.

Shielded electrets can particularly be used as display boards to which for example paper notices or the like can adhere to the unshielded face. It will be appreciated that in order for an article to adhere (ie to be electrostatically pinned) to a notice board the electrostatic attraction of the electret must hold the article against its weight.

According to a first aspect of the invention, a method of manufacturing an electret element comprises removing a substantial proportion of any electrical and/or mechanical contamination from one face of a base electret and coating that face with a thin film of polymeric material of opposite natural polarity to that of the electret polarity. The thin coating film may be coated with a second thin film of polymeric material of opposite natural polarity to that of the first film.

The inventor has discovered that applying the coating film of natural polarity opposite to the polarity of the base electret has the effect of reversing the resultant electret polarity at the coated face. Thus, if only one face of a sheet electret is coated the resultant electret element will have opposite faces of different polarity. This can have important practical advantages as will be clear from the following description. Applying a second coating will produce a further reversal of polarity at the face concerned.

Furthermore, it has been discovered that for some at present unexplained reason if a coating film of opposite natural polarity is applied to a negative base electret, not only is the polarity reversed but the field strength of the resultant electret element is materially increased as compared with the original field strength of the base electret. The converse for some reason applies with a positive base electret, that is the resultant field strength is less than the original. Thus, the application of a coating film to an electret can result in an element which is usable for an application such as electrostatic pinning when the original negative base electret does not have sufficient field strength for this purpose. Examples of the considerable increase in field strength obtainable are described hereinafter.

For a given base electret the applied coating film should have a minimum thickness which can be determined in any particular case by experiment. It has been found that with a base electret of given field strength there is a minimum coating thickness below which the polarity will not be reversed nor will the field strength be increased or reduced.

The method may comprise separate cleaning and coating steps, the former removing the surface contamination to the extent necessary. However, cleaning and coating may be accomplished in a single step with the cleaning achieved by a solvent in which the coating material is dissolved for ease of application. The coating may be applied for example by brushing, spraying or dip coating.

According to a second aspect of the invention, an electret element comprises a base electret at least one face which has a coating consisting of a thin film of a polymeric material of opposite natural polarity to that of the polarity of the base electret. The sheet electret element may have a second coating consisting of a thin film of a second polymeric material having opposite natural polarity to that of the first.

An electret assembly, according to a third aspect of the invention, comprises a first base electret having on one face thereof a film coating of opposite natural polarity to that of the polarity of the base electret, and a second base electret in which a face of the second base electret is in contact with or in close proximity to an exposed face of said film coating.

According to a fourth aspect of the invention an electret assembly comprises a first sheet base electret having on a first face thereof a coating of opposite natural polarity to that of the polarity of the first base electret and a second uncoated face, and a second base electret having on a first face thereof a coating of opposite natural polarity to that of the polarity of the second base electret and a second uncoated face, in which the uncoated faces of the electrets, or the two coated faces, are adjacent and confront each other.

Fig. 1 illustrates an electret element in accordance with one aspect of the invention;

Fig. 2 illustrates the element shown in Fig. 1 together with a display article which is pinned thereto;

Fig. 3 illustrates an electret assembly in accordance with another aspect of the invention together with a display article pinned therein;

Fig. 4 illustrates the assembly of Fig. 3 in an open position;

Fig. 5 is a diagrammatic representation of the assembly of Fig. 3; and

Fig. 6 illustrates an embodiment in accordance with a further aspect of the invention adhered to a support surface.

When a face of an electret of a given polarity is electrically shielded the shielding material develops at the interface with the electret a charge compensating that of the electret. The inventor has found that if the shielding is replaced by a thin film of suitable polymeric material having a thickness, typically in the order of $10^{-6}$m, then it will exhibit a complementary charge to that of the electret not only on the interface with the electret but also on its exposed face. For example, if an electret sheet of negative polarity is coated with a thin film of cationic or positive polymeric material then a positive charge will be developed at the interface of the film and the sheet, and on the exposed face of the film. Conversely, if a positive electret sheet is shielded with an anionic or negative polymer film then a negative charge will develop on both faces of the film. Thus, the effective polarity of an electret can be reversed using what is hereinafter referred to as a polarity reversal technique.

A typical process employing a method in accordance with the invention, by which mass produced polymeric sheet carrying latent electret charges can be made into practically usable electret elements, will now be described. As already mentioned such mass produced sheet will have acquired temporary surface charges, also the surface may be contaminated with particulate debris, anti-static coatings of conductive salts and/or additives which have leached from the polymeric material such as lubricants, toners, stabilizers, etc. A first step in the process involves treating the surfaces of the sheet with a cleaning agent such as ethyl or diacetone alcohol and subsequently drying off the sheet. The cleaning agent is applied in a manner such as spraying and wiping to remove and/or dissipate a substantial amount of the electrical and/or mechanical surface contamination.

A thin film of suitable polymeric material is applied to either or both faces of the sheet by first dissolving the polymeric material in a solvent solution which is then painted by spraying, brushing, etc on to the sheet. For coating a negative electret sheet a solution of one part by weight of carbonated acrylic polymer in a solution of one part 74 OP methylated spirit and nine parts diacetone alcohol can be used. A suitable coating for a positive electret sheet consists of one part of a polymer of polyvinyl chloride in a solution comprising thirteen parts Cyclohexanone and thirteen parts of Xylene.

The uncoated area of the sheet may be shielded with a conductive coating of graphite suspended in a modified alkyd resin. The resin and graphite are initially in solution with a solvent (Xylene) enabling them to be painted on to the sheet. If a transparent conductive coating is required a commercially available product Conductive Polymer 567 (manufactured by Messrs Allied Colloids) can be combined with a film forming medium such as a soluble acrylic polymer dissolved in distilled water in the ratio 20:1:10. It is then painted on to the appropriate face of the sheet and subsequently steam or air dried.

The coatings for the electret sheets can be formulated so that the carrier solution of the polymeric material also serves to disperse the unwanted temporary charges. Also, the coating may be coloured, pigmented and/or provide a surface which is able to be printed on or otherwise decorated. Preferably any pigment that is used has an appropriate ionic structure to facilitate the required polarity change.

Commonly available polymeric sheet materials from which usable electret assemblies can be manufactured include stable synthetic materials such as polymers or co-polymers of vinyl chloride or vinyl acetate, polycarbonates, polystyrene, polyesters, co-polyesters and polymethylacrylate. All these materials are characterised by having high values of volume and surface resistivity. Preferably the materials used have no plasticiser content in their formulation and in the case of polyvinyl materials rigid calendered unplasticised PVC is preferably used. The size of sheets which can be used is dependent on maximum dimensions of that which is commercially available. Typical thicknesses of sheet used are in the order of 50-250 microns.

It has been found that the effective electrical field strength is enhanced by converting a negative electret into a 'positive' electret element by coating one or both faces of the negative electret with a cationic polymeric film in the aforementioned manner. Results of tests made on various bi-polar electret elements made from negative electrets indicate that the electrostatic field strength is in the order of 50% higher than that of the negative electret alone. Typical test figures are as follows:

Test A - A 300mm by 200mm sheet of clear unplasticised PVC having a thickness of 125 microns was cleaned using solutions of methyl alcohol and diacetone alcohol. An open circuit negative voltage of 2900V/cm was measured. The sheet was then coated on both faces with a solution of cationic polymer and dried. The open circuit voltage was then measured as 4480V/cm positive.

Test B - A 250 micron thick sheet of polystyrene was tested as in Test A, resulting in an initial reading of 2750V/cm negative and a final reading of 4270V/cm positive.

Test C - A 75 micron thick sheet of polyester tested as in Test A, resulted in an initial reading of 1400V/cm negative and a final reading of 2500V/cm positive.

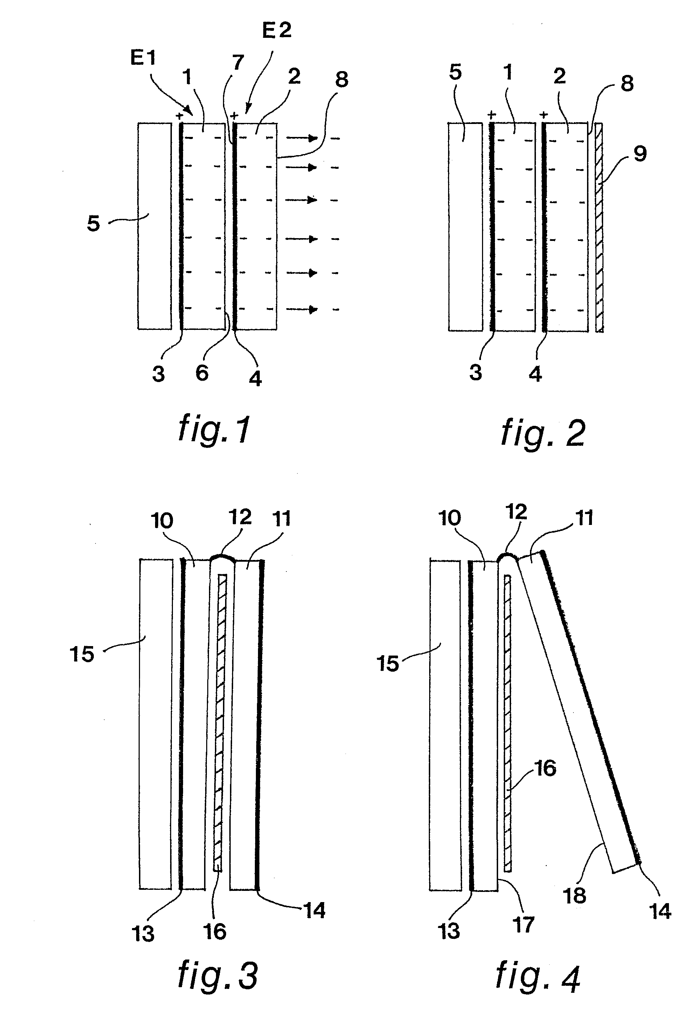

The polarity reversal technique can be used in accordance with said fourth aspect of the invention in which a preferred electret assembly consists of two or more electrets elements to improve the effective electrical field strength externally thereof. One example illustrated in Figs. 1 and 2 consists of two negative base electrets 1 and 2 made of PVC, one face of each being coated with a 0.25 microns thick cationic polymer film 3 and 4 respectively to form two discrete electret elements. The uncoated face of the electret 1 is shielded by a screen 5. The film 4 develops a positive charge compensating for that of the electret 1 which is then electrically shielded by a complementary negative charge developed at a contacting face of the screen 5. An uncoated face 6 of the electret 2 is in contact with an outer face 7 of the film 4, the differing charges at which hold the electret elements 1,3 and 2,4 together. The film 4 develops a positive charge greater than that of the negative charge in the electret 1 and which, by virtue of the film 4 being in contact with the electret 2, induces an enhanced negative electrical field at an exposed face 8 of the electret 2. The enhanced electrical field enables a display notice 9 or the like to be adhered to the face 8 of the electret 2.

It has been found that aggregation of charges in an assembly of two electret elements is achieved when there is separation of the molecular surfaces of the two elements. This is achieved as in the aforementioned example by placing the two elements in close though non-binding contact, whereby they are pinned together by colombic forces of attraction. When it is required to attach two such elements mechanically this must be done with a non-polar adhesive which is compatible with the materials of both the contacting film and electret and which is electrically inert. Tests have shown that where solvent welding has been used to attach two elements together in molecular contact, the charges were not aggregated and that the charges of both assemblies migrated toward the weld, thus effectively reducing the charge at the open face of the combined assembly to below that of the original value of the single electret elements. However, on breaking the weld and separating the two elements there appeared to have been no permanent reduction in their associated electric fields.

Figs. 3, 4 and 5 illustrate a display notice board which is an assembly of two electret elements comprising negative electrets 10 and 11 which are pivotally interconnected by a hinge strip 12. Opposite outer faces of the electrets 10 and 11 are coated with cationic polymer films 13 and 14 respectively. The film 13 is intermediate the electret 10 and an electrical shield 15, whilst a display sheet 16, for example a paper notice, can be pinned electrostatically between the two uncoated inner faces 17 and 18 of the electrets 10 and 11 respectively. The electret 11 and its associated film 14 are transparent so that the display sheet can be viewed.

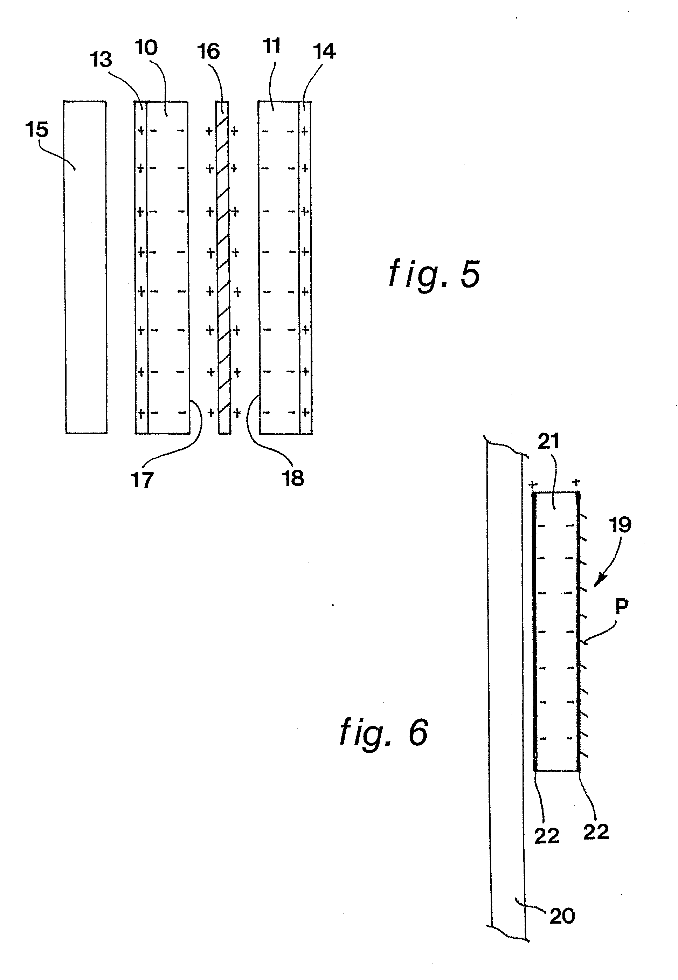

A display element 19, shown pinned to a support surface 20 in Fig. 6, is an embodiment of the invention in which a negative sheet electret 21 is coated on both faces with a cationic film material 22. In this instance the support surface 20 can suitably be a wall of a room and the element 19 may be a sign, sheet, notice or the like. Preferably, the film material 22 is easily printed upon.

Another embodiment of the invention (not shown) uses an electret sheet element, typically a PVC dipolar negative electret coated on both faces, as a machine bed and/or electrostatic chuck to replace a conventional vacuum bed. It will be appreciated that the invention is in no way limited to the specific material described and may utilise any suitable electret and polymeric materials.

A display board employing the invention functions in an electrostatic sense in a manner analogous to a magnetic display board to which display elements of ferro-magnetic material can be magnetically pinned. The advantages of alternative electrostatic pinning and magnetic pinning can be achieved with a display board comprising an electret element in accordance with the invention, wherein a rear surface coating of the electret element is a magnetic film of opposite natural polarity to the polarity of the base electret. Thus, the magnetic coating serves not only for magnetic pinning but also as the rear coating which enhances the electrostatic electret field. For the magnetic coating there may be used a magnetic ink as employed by printers for other purposes.

## Claims

1. An electret element characterized by a base electret (1) of a given polarity with at least one face thereof having a coating consisting of a first film (3) of polymeric material of opposite polarity.

2. An electret element in accordance with claim 1, characterized by having a coating on said first film consisting of a second film of polymeric material of said given polarity.

3. An electret element in accordance with claim 1 or claim 2, characterized by having a second face opposite said first face and having a corresponding coating consisting of a film (22) of polymeric material of said opposite polarity.

4. An electret element in accordance with claim 3, characterized by said corresponding coating (22) consisting of a ferromagnetic film.

5. An electret assembly characterized by a first electret element (E2) in accordance with any one of the preceding claims, and a second base electret (1) disposed adjacent a face of said first or second film (when present) remote from the base electret (2) of the first element (E2).

6. An electret assembly, characterized by a first and a second base electret element each in accordance with any one of claim 1 to 4, and each having an outer face with these outer faces (6 and 7) adjacent and confronting each other.

7. An electret element or assembly in accordance with any one of the preceding claims, characterized by the or each base electret (21) being a mass produced proprietory polymeric material in sheet form.

8. An electret element or assembly in accordance with any one of the preceding claims, characterised by the or each base electret being a sheet having a thickness in the range of 25 to 500 microns and the or each film having a thickness in the range of 0.25 to 1.00 micron.

9. A method of manufacturing an electret element, characterized by the steps of cleaning one face of a base electret (1) of a given polarity to remove electrical and/or mechanical contamination therefrom, and then coating said face to provide thereon a first film (3) of polymeric material of the opposite polarity.

10. A method of manufacturing an electret element in accordance with claim 9, characterized by said cleaning and said coating steps being accomplished by application of a fluid comprising said polymeric material dissolved in a solvent carrier.

11. A method of manufacturing an electret element in accordance with claim 9 or claim 10, characterized by further comprising the step of coating an exposed face of said first film to provide thereon a second film of polymeric material of said given polarity.

12. An electret element as claimed in any one of claims 1 to 8, manufactured in accordance with the method of claim 9 or claim 10.

fig.1

fig. 2

fig.3

fig. 4

0280485

fig. 5

fig. 6